# EUROPÄISCHE PATENTSCHRIFT

(11) **EP 2 837 643 B1**
(45) Veröffentlichungstag und Bekanntmachung des Hinweises auf die Patenterteilung: **10.10.2018**
(21) Anmeldenummer: 13180630.9
(22) Anmeldetag: 16.08.2013
(51) Int. Cl.: C08G 18/80, C08J 5/06, C08L 75/04

(54) **PULVERFÖRMIGER, IN WASSER DISPERGIERBARER HAFTVERMITTLER**
POWDER-FORM ADHESION PROMOTERS THAT CAN BE DISPERSED IN WATER
AGENT ADHÉSIF POUDREUX DISPERSIBLE DANS L'EAU

(43) Veröffentlichungstag der Anmeldung: 18.02.2015
(73) Patentinhaber: EMS-PATENT AG, 7013 Domat / Ems (CH)
(72) Erfinder: Kaplan, Andreas, 7000 Chur (CH)
(74) Vertreter: Pfenning, Meinig & Partner mbB

(56) Entgegenhaltungen:
- EP-A1- 1 038 899
- EP-A1- 2 450 389

## Beschreibung

Die Erfindung betrifft einen pulverförmigen, in Wasser dispergierbaren Haftvermittler für Verstärkungseinlagen, der sich dadurch auszeichnet, dass er teilweise verkapptes niedermolekulares Isocyanat sowie Alkylnaphthalinsulphonat als Netzmittel und gegebenenfalls Additive enthält. Die Erfindung betrifft weiterhin ein Verfahren zur Herstellung eines derartigen pulverförmigen Haftvermittlers und dessen Verwendung für die Behandlung von Verstärkungseinlagen zur Herstellung von verstärkten Gummiprodukten.

Bei der Herstellung von faserverstärkten Gummiprodukten hat es sich als vorteilhaft erwiesen, wenn zur Verbesserung der Haftfestigkeit, zwischen textiler Verstärkungseinlage und dem Kautschuk ein Haftvermittler eingesetzt wird. Bedeutung hat ein derartiger Haftvermittler insbesondere im Bereich von Reifencord als Verstärkungseinlage und anderen hochbelasteten Verbundwerkstoffen mit Verstärkungsfasern. Insbesondere für die Anwendung im Reifencordbereich ist es bekannt geworden, Resorcin-Formaldehyd-Latexsysteme (RFL) zur Verbindung von synthetischen Fasern zu Gummiprodukten einzusetzen. Verfahrenstechnisch kann dies so geschehen, dass in einem sogenannten ein-Schritt-Verfahren eine Imprägnierung des Verstärkungselementes mit einer Mischung aus RFL und einem Haftvermittler durchgeführt wird.

Aus dem Stand der Technik sind auch sogenannte zwei-Schritt-Verfahren bekannt, bei denen zuerst eine Imprägnierung des Verstärkungselementes mit dem Haftvermittler und einer Glycidylverbindung vorgenommen wird und dann in einem zweiten Schritt die Applikation von RFL erfolgt.

Aus dem Stand der Technik sind für derartige Verfahren auch schon speziell abgestimmte Haftvermittler bekannt. Die DE 19913042 A1 beschreibt einen Haftvermittler für die Behandlung von Verstärkungseinlagen zur Herstellung von verstärkten Gummiprodukten in Form einer wässrigen Dispersion. Der Haftvermittler basiert dabei auf Isocyanaten.

Weiterhin ist aus der EP 2450389 A1 ein pulverförmiger Haftvermittler bekannt, der auch in Wasser dispergierbar ist, der aus einem niedermolekularen Isocyanat, Netzmittel, sowie mindestens einem Bindemittel und gegebenenfalls einem Katalysator und/oder einem Additiv besteht. Die Herstellung dieses Haftvermittlers erfolgt dabei in der Weise, dass das verkappte Isocyanat als Dispersion und das Bindemittel als Lösung verwendet wird und zusammen mit den anderen Additiven in Wasser eingerührt wird. Diese Dispersion wird anschließend mittels einer Nassmahlung auf die gewünschte Partikelgröße gemahlen und danach einer Trocknung, bevorzugt einer Wirbelschicht-Sprühtrocknung unterzogen.

Nachteilig bei dem vorstehend beschriebenen Haftvermittler ist allerdings, dass die erreichbare Partikelgröße und die Partikelgrössenverteilung noch nicht hinreichend befriedigend ist. Auch ist das Verfahren zur Herstellung dieses Haftvermittlers über den Umweg der Dispersion und der Nassmahlung umständlich und ökonomisch unwirtschaftlich.

Ausgehend hiervon ist es deshalb die Aufgabe der vorliegenden Erfindung, einen pulverförmigen, in Wasser dispergierbaren Haftvermittler für textile Verstärkungseinlagen vorzuschlagen, der ein vereinfachtes Herstellungsverfahren und eine enge Verteilung der Partikelgröße besitzt und trotzdem eine vergleichbare Dispergierbarkeit aufweist.

Die Aufgabe wird durch die Merkmale des Patentanspruches 1, hinsichtlich des Verfahrens durch die Merkmale des Anspruches 14, gelöst.

Der erfindungsgemäße Haftvermittler enthält somit 85 bis 97 Gew.-% mindestens eines zumindest teilweise verkappten niedermolekularen Isocyanats, wobei das mindestens eine niedermolekulare Isocyanat eine Molmasse von weniger oder gleich 500 g/mol aufweist, und 15 bis 3 Gew.-% eines Alkylnaphthalinsulfonats als Netzmittel sowie gegebenenfalls 0 bis 10 Gew.-% Additive, wobei Bindemittel ausgeschlossen sind.

Der erfindungsgemäße Haftvermittler zeichnet sich somit gegenüber dem Stand der Technik, insbesondere gegenüber der dem Haftvermittler nach der EP 2 450 389 A1 dadurch aus, dass er gänzlich ohne Bindemittel auskommt, und dass ein spezielles Netzmittel, nämlich Alkylnaphthalinsulfonat in dem im Anspruch 1 angegebenen Grenzen enthalten ist.

Erfindungswesentlich ist dabei, dass beim Haftvermittler nach der Erfindung gänzlich auf Bindemittel verzichtet werden kann, und das ein spezifisch ausgewähltes Netzmittel in einem genau definierten Mengenbereich vorhanden ist. Obwohl ohne Bindemittel gearbeitet wird, ist die pulverförmige Formulierung in ihren Eigenschaften dem Stand der Technik, insbesondere der EP 2 450 389 A1, gleichwertig bzw. sogar überlegen. Es hat sich dabei gezeigt, dass es wesentlich ist, dass das Netzmittel im Bereich zwischen 3 und 15 Gew.-% im Haftvermittler enthalten ist. Werden weniger als 3 Gew.-% Netzmittel (bezogen auf die Summe des verkappten Isocyanates und des Netzmittels) eingesetzt, wird keine zufriedenstellende Dispergierung mehr festgestellt. Dies führt einerseits zu Materialverlusten, andererseits zu einer unzureichenden Haftung des Reifencords oder Treibriemencords zum Gummi (peel-Haftung). Bei mehr als 15 Gew.-% Netzmittel leidet ebenfalls die Haftung des Cords zum Gummi. Die Haftung zum Cord zum Beispiel zu einem Reifencord oder Treibriemencord wird über die Peel-Haftung bestimmt. Die Peel-Haftung muss dabei mindestens 140 Newton/Inch betragen. Bei tieferen Peel-Haftungswerten ist eine sichere Verwendung des verstärkten Gummiprodukts, z.B. des Reifens oder Treibriemens, nicht mehr gegeben ist.

Erfindungswesentlich bei dem erfindungsgemäßen Haftvermittler ist, dass als Netzmittel ausschließlich Alkylnaphthalinsulfonate, bevorzugt Natriumdiisobutylnaphthalinsulfonat eingesetzt wird. Es hat sich gezeigt, dass insbesondere die Auswahl dieses Netzmittels bei der Herstellung des erfindungsgemäßen Haftvermittler vorteilhaft ist, da sowohl das Netzmittel als auch das Isocyanat als pulverförmige Ausgangssubstanzen eingesetzt werden können und damit eine einfache Trockenmahlung bis zur gewünschten Partikelgröße durchgeführt werden kann, ohne dass dabei Verluste an Netzmittel auftreten.

Die erfindungsgemäße Kombination des vorstehend beschriebenen ausgewählten Netzmittels mit dem Isocyanat hat weiterhin den Vorteil, dass auf die Verwendung eines Bindemittels verzichtet werden kann. Bindemittel werden normalerweise in diesem Bereich eingesetzt, um die Bereitstellung eines fließfähigen, staubarmen Pulvers zu ermöglichen. Bei dem Bindemittel, die gewöhnlich bei den Haftvermittlern aus dem Stand der Technik verwendet werden, handelt es sich um Bindemittel, die ausgewählt sind aus der Gruppe bestehend aus Vinylalkohol-Vinylacetat-Copolymere, Polyvinylpyrolidone, Polyvinylakohole, Polyacyrlsäuresalze, Salze von Polyacrylsäurecopolymeren, Polysaccharide, Stärke, Cellulose, Guar, Tragcantinsäure, Dextran, Alginate und deren Carboxymethyl-, Methyl-, Hydroyethyl-, Hydroxypropyl-Derivate, Casein, Sojaprotein, Gelatine, Ligninsulfonate und Mischungen hiervon. Derartige Bindemittel sind somit erfindungsgemäß ausgeschlossen.

Das niedermolekulare Isocyanat, das bei dem erfindungsgemäßen Haftvermittler verwendet wird, besitzt eine Molmasse von ≤ 500 g/Mol, bevorzugt eine Molmasse im Bereiche von 90-400 g/Mol und ganz besonders bevorzugt eine Molmasse im Bereich von 150-300 g/Mol. Beispiele für derartige niedermolekulare Isocyanate sind:
4,4'-Diphenylmethandiisocyanat (4,4'-MDI),
2,4'-Diphenylmethandiisocyanat (2,4'-MDI),
3,4'-Diphenylmethandiisocyanat (3,4'-MDI),
2,2'-Diphenylmethandiisocyanat (2,2'-MDI),
2,3'-Diphenylmethandiisocyanat (2,3'-MDI),
2,4-Toluoldiisocynat, 2,6-Toluoldiisocynat,
1-Isocyanato-3-Isocyanatomethyl-3,5,5-Trimethylcyclohexan, 1,4-Naphthalindiisocynat (1,4-NDI), 1,5-Naphthalindiisocyanat (1,5-NDI),
Isophorondiisocyanat (IPDI), Hexamethylendiisocyanat (HDI) oder Mischungen hiervon.

Gemäß der vorliegenden Erfindung ist es weiterhin bevorzugt, wenn das mindestens eine zumindest teilweise verkappte niedermolekulare Isocyanat teilweise oder vollständig blockiert ist. Als Beispiele für Blockierungsmittel sind Monophenole, insbesondere Phenol, Resorcin, Kresol, Trimethylphenole oder tert. Butylphenole, Lactame, insbesondere ε-Caprolactam, δ-Valerolactam oder Laurinlactam, Oxime, insbesondere Methyl-Ethyl-Ketoxim (Butanonoxim), Methyl-Amyl-Ketoxim (Heptanonoxim)oder Cyclohexanonoxim, leicht enol-bildende Verbindungen, insbesondere Acetoessigester, Acetylaceton oder Malonsäurederivate, primäre, sekundäre oder tertiäre Alkohole, Glykolether, sekundäre aromatische Amine, Imide, Isocyanate, Mercaptane, Triazole sowie Mischungen hiervon zu nennen.

Ganz besonders bevorzugt ist es beim erfindungsgemäßen Haftvermittler wenn das mindestens eine zumindest teilweise verkappte niedermolekulare Isocyanat ein Uretdion ist. Uretdione sind dimeriisierte Isocyanate. Die Dimerisierung kann dabei durch basische Katalysatoren wie Pyridin oder tert. Phosphane beschleunigt werden, aromatische Isocyanate dimerisieren dabei auch ohne Katalysator. Ein bevorzugtes Beispiel eines derartigen Uretdions ist das Uretdion des Diphenylmethandiisocyanats (MDI).

Da ein Uretdion nur mit sich selbst verkappt ist, werden beim Einbrennen des auf die Verstärkungseinlage z.B. den Cord, insbesondere den Reifencord oder Treibriemencord, aufgetragenen Haftvermittlers keine flüchtigen Substanzen freigesetzt, deshalb zeigen die Rollen und Walzen der Beschichtungsanlage sehr viel weniger Beläge oder Verunreinigungen, so dass die Unterbruchszeiten für Reinigungssarbeiten stark reduziert werden.

Im Gegensatz zu dem heute nahezu ausschliesslich als Haftvermittler eingesetzten mit ε-Caprolactam verkappten MDI kann mit dem Uretdion des MDI bei ca. 60 °C tieferen Einbrenntemperaturen gearbeitet werden. Dank der tieferen Einbrenntemperatur ist die behandelte Verstärkungseinlage, z.B. der Reifencord oder Treibriemencord, weicher, d.h. flexibler und zeigt weniger Bruchstellen. Auf Grund dieser erhöhten Flexibilität der behandelten Verstärkungseinlage können anstelle des heute zusammen mit dem Haftvermittler eingesetzten Glycidylethers auf Basis Ethylenglykol auch Glycidylether höherwertiger Alkohole wie z.B. Sorbitol verwendet werden. Diese führen zwar zu einer leichten Versteifung der behandelten Verstärkungseinlage jedoch auch zu einem verbesserten Überbrennverhalten und zu einem verbesserten Alterungsverhalten, ohne dass insgesamt eine zu hohe Steifigkeit der behandelten Verstärkungseinlage, z.B. dem Reifencord oder Treibriemencord, in Kauf genommen werden muss.

Die erfindungsgemäße Haftmittelformulierung kann neben den erfindungswesentlichen Bestandteilen des niedermolekularen Isocyanats und des Alkylnaphthalinsulfonats als Netzmittel in den angegebenen Mengenverhältnissen noch Additive enthalten. Als Additive sind Katalysatoren, Entschäumer, insbesondere langkettige Alkohole, hochpolymere Glykole, Fettsäureethoxylate, Trialkylmethylamine, Silicone oder Mischungen davon, besonders bevorzugt Silicone in Form von Silicon-Emulsionen, Farbstoffe, insbesondere Ruß und/oder Füllstoffe, insbesondere Silikate, sowie Mischungen hiervon zu nennen.

Von der mengenmäßigen Zusammensetzung ist es bevorzugt, wenn der Haftvermittler 90 bis 96 Gew.-%, bevorzugt 93 bis 96 Gew.-% und ganz besonders bevorzugt 94 bis 95,5 Gew.-% des mindestens einen teilweise verkappten niedermolekularen Isocyanats sowie 4 bis 10 Gew-%, bevorzugt 7 bis 4 Gew.-%, besonders bevorzugt 6 bis 4,5 Gew.-% des Alkylnaphthalinsulfonats als Netzmittel enthält. Die Additive können in einer Menge von 0,1 bis 10 Gew.-% enthalten sein, wobei die Summe der einzelnen Bestandteile 100 Gew.-% ergeben muss.

Beim erfindungsgemäßen Haftvermittler ist es allerdings ganz besonders bevorzugt, wenn dieser ausschließlich aus dem verkappten Isocyanat und dem Alkylnaphthalinsulfonat in den angegeben Mengenverhältnissen besteht. Besonders bevorzugt ist dabei wenn der Haftvermittler aus 95 Gew.-% des mindestens einen verkappten Isocyanat und 5 Gew.-% des Alkylnaphthalinsulfonats besteht.

Das dispergierbare Pulver des Haftvermittlers besitzt einen volumenmittleren Partikeldurchmesser im Bereich von 0,1 bis 40 µm, bevorzugt im Bereich von 0,2 bis 20 µm und ganz besonders bevorzugt im Bereich von 0,3 bis 12 µm. Der Partikeldurchmesser des Pulvers wird am Pulver selbst mittels Lasermessung nach ISO 13320 bestimmt. Die Partikelgröße des erfindungsgemäßen Pulvers liegt somit deutlich unterhalb der Partikelgröße des Pulvers nach der EP 2 450 389 A1, die im Bereich von 50 bis 50.000 µm liegt. Dies ist darauf zurückzuführen, dass im Stand der Technik Bindemittel in der Formulierung enthalten sind, die zu einer Agglomeration führen, so dass deutlich größere Partikel entstehen. Der erfindungsgemäße Haftvermittler hat somit den Vorteil, dass bereits im Pulver kleine Partikel vorliegen, deren Größe sich dann bei der Dispergierung nicht mehr ändert.

Dies wird auch durch die durchgeführte Untersuchung bezüglich der Dispergierbarkeit bestätigt.

Die Dispergiereigenschaften des erhaltenen Pulvers werden wie folgt bestimmt. In einem Becherglas wird deionisiertes Wasser vorgelegt und dieses mit einem Magnetrührwerk gerührt. Die zu dispergierende Probe wird zugegeben. Die Dispergierbarkeit wird nach 1 Minute und nach 10 Minuten Rühren visuell beurteilt und mit Zahlen von 0 bis 100 bewertet, wobei 0 keine Dispergierung und 100 vollständige Dispergierung bedeutet.

Die Korngrößenverteilung (d₅₀- und d₉₅-Wert) der nach 10 Minuten erhaltenen Dispersion wird mittels Lasermessung nach ISO 13320 bestimmt. Es hat sich nun gezeigt, dass der d₅₀-Wert des erfindungsgemäßen Pulvers maximal 5 µm, bevorzugt maximal 2 µm und ganz besonders bevorzugt maximal 1,5 µm beträgt. Der D₉₅-Wert der erfindungsgemäßen pulverförmigen Formulierung beträgt dabei maximal 10 µm, bevorzugt maximal 6 µm und besonders bevorzugt maximal 5 µm.

Je kleiner der Partikeldurchmesser des Pulvers, desto geringer ist dessen Sedimentationsneigung im Tauchbad bei der Cordbeschichtung und damit die Lebensdauer des Tauchbades, wobei der d₉₅-Wert als Kriterium wichtiger ist, als der d₅₀-Wert, da beim d₉₅-Wert auch die größeren Teilchen erfasst werden.

Die Lasermessungen werden nach dem Prinzip der Laserbeugung mit einem Granulometer Cilas 1064 der Quantachrome GmbH (Deutschland) durchgeführt.

Die Peel-Haftung wird nach ASTM 4393 an achtlagigen Prüfkörpern mit symmetrischem Aufbau bestimmt (2 Lagen Cord und 6 Lagen Gummi, vgl. Fig. 2, ASTM 4393). Die Zugprüfung erfolgt bei einer Messtemperatur von 23 °C mit einer Zuggeschwindigkeit von 20 mm/min. Die Zugprüfung wird nach Option 1 der ASTM 4393 ausgewertet. Als Cord wird nicht aktivierter Cord Performance Fibers HMLS Polyester, 1100x1x2 dtex, ZS 470, 1X50 verwendet und als Gummi Continental B458, Dicke 0,4 mm. Die Vulkanisation erfolgt bei 154 °C und 6,5 bar für 30 min.

Die Erfindung betrifft weiterhin ein Verfahren zur Herstellung eines pulverförmigen, in Wasser dispergierbaren Haftvermittlers für textile Verstärkungseinlagen. Das erfindungsgemäße Verfahren zeichnet sich dadurch aus, dass 85 bis 97 Gew.-% des zumindest teilweise verkappten niedermolekularen Isocyanat, wobei das mindestens eine niedermolekulare Isocyanat eine Molmasse von weniger oder gleich 500 g/mol aufweist, mit 15 bis 3 Gew.-% des Alkylnaphthalinsulfonats als Netzmittel und gegebenenfalls unter Hinzufügung von pulverförmigen Additiven einer Trockenmahlung unterzogen wird, mit der Maßgabe, dass die Trockenmahlung so durchgeführt wird, dass die Korngrößenverteilung (d₅₀- und d₉₅-Wert) der nach zehn Minuten erhaltene Dispersion in deionisiertem Wasser mittels Lasermessung nach ISO 13320 für den d₅₀-Wert maximal 5 µm und für den d₉₅-Wert maximal 10 µm beträgt. Für das erfindungsgemäße Verfahren gelten selbstverständlich die vorstehend beim Haftvermittler beschriebenen Möglichkeiten in Bezug auf die Mengenverhältnisse, die Formulierungsbestandteile, der Partikelgröße des Pulvers und der Korngrössenverteilung der Dispersion.

Als Vorteil des erfindungsgemäßen Verfahrens ist anzusehen, dass durch die Trockenmahlung gezielt eine kleine Partikelgröße des Pulvers in den angegebenen Grenzen von 0,1 µm bis 40 µm eingestellt werden kann. Diese Partikelgröße bleibt dann bei Herstellung einer Dispersion im Wesentlichen erhalten.

Die Komponenten des Haftvermittlers - zumindest teilweise verkapptes niedermolekulares Isocyanat, Netzmittel und gegebenenfalls Additive - werden in einem Pulvermischer gemischt und anschließend der Trockenmahlung unterworfen. Die Komponenten können jedoch auch einzeln in die Mühle dosiert werden. Beim erfindungsgemäßen Verfahren hat es sich dabei als vorteilhaft erwiesen, wenn die Trockenmahlung mittels einer Strahlmühle durchgeführt wird. Insbesondere bei Anwendung einer Strahlmühle lassen sich die vorstehend genannten Werte in Bezug auf die Partikelgröße erreichen.

Bei Strahlmühlen, auch Luftstrahlmühlen genannt, werden die Teilchen in einem Gasstrom , dem Mahlgas, vermahlen, wobei die Zerkleinerung der Partikel mittels der durch das Mahlgas eingebrachten Bewegungsenergie erfolgt, und zwar entweder durch die gegenseitige Teilchenstöße, z.B. im Gegenstrahl oder durch das Auftreffen der Teilchen auf Prallplatten. Zur Trennung des Mahlgutes vom Mahlgas dienen Filter, Windsichter, welche statisch oder dynamisch ausgelegt sein können oder Kombinationen davon.

Beispiele für Strahlmühlen verschiedener Bauarten sind Spiralstrahlmühle, Dichtbettstrahlmühle, Finnpulva Gegenstrahlmühle, NPK I-mill, Majac Gegenstrahlmühle, Ovalrohrstrahlmühle oder Fliessbettgegenstrahlmühlen.

Bevorzugt werden Fliessbettgegenstrahlmühlen mit statischem oder dynamischem Windsichter verwendet, wobei dynamische Windsichter bevorzugt sind. Externe Windsichter sind möglich, bevorzugt ist dieser jedoch in die Mühle integriert. Als dynamischer Windsichter dient z.B. ein stufenlos regelbares Sichterrad. Die obere Partikelgrenze kann dabei über die Drehgeschwindigkeit des Sichterrades geregelt werden. Mit steigender Drehgeschwindigkeit nimmt dabei die Größe der durchgelassen Partikel ab.

Ein Haftvermittler wie vorstehend beschrieben eignet sich besonders bevorzugt zur Behandlung von Verstärkungseinlagen zur Herstellung von verstärkten Gummiprodukten wie eingangs in der Beschreibung erläutert.

Bei den Verstärkungseinlagen handelt es sich insbesondere um textile Verstärkungseinlagen, z.B. aus Polyester, Polyethylen, Polyamid, Rayon, Baumwolle, Bastfasern, Sisal, Hanf, Flachs oder Kokosfasern. Diese so behandelten Verstärkungseinlagen werden insbesondere zur Herstellung von Reifencord, Transportbändercord, Treibriemencord oder Cord für mechanische Gummiteile oder Composites eingesetzt.

Bei den verstärkten Gummiprodukten handelt es sich insbesondere um Reifen, sowohl für PKW als auch für Nutzfahrzeuge und um Treibriemen, z.B. Keilriemen, Keilrippenriemen, Rundriemen, Flachriemen oder Zahnriemen. Anhand der nachfolgenden Beispiele wird der erfindungsgemäße Gegenstand näher erläutert, ohne diesen auf die hier gezeigten speziellen Ausführungsformen einzuschränken.

**Tabelle 1 zeigt die in den Beispielen und Vergleichsbeispielen verwendeten Materialien.**

| Komponente | Handelsname | Beschreibung | Hersteller |
|---|---|---|---|
| niedermolekulares Isocyanat (A1) | - | 4,4'-Methylen-bis(phenylisocyanat)-Dimer (CAS-Nr. 17589-24-1), pulverförmig | EMS-CHEMIE AG, Schweiz |
| niedermolekulares Isocyanat (A2) | Grilbond IL-6 50 % F | niedermolekulares mit Caprolactam verkapptes 4,4'-Diphenylmethan-diisocyanat 50 gew.-%ige wässrige Dispersion | EMS-CHEMIE AG, Schweiz |
| Netzmitttel (B1) | Nekal BX trocken | Natriumsalz der Diisobutylennaphthalinsulfonsäure (CAS-Nr. 27213-90-7), pulverförmig Natriumsulfatgehalt ca. 25 Gew.-% | BASF, Deutschland |
| Netzmitttel (B2) | Tamol NN 8906 | Natriumsalz von Naphthalinsulfonsäurepolykondensat, pulverförmig Natriumsulfatgehalt ca. 6 Gew.-% | BASF, Deutschland |
| Bindemittel | Mowiol 4-88 * | Polyvinylalkohol Mw** 31000 87 - 89 % hydrolysiert | Kuraray Europe GmbH, Deutschland |

**Tabelle 2 enthält die Zusammensetzungen der erfindungsgemäßen Beispiele.**

| Komponente | Einheit | Beispiele | | |
|---|---|---|---|---|
| | | 1 | 2 | 3 |
| niedermolekulares Isocyanat (A1), pulverförmig | Gew.-% | 95 | 90 | 85 |
| Netzmittel (B1), pulverförmig | Gew.-% | 5 | 10 | 15 |
| Feststoffgehalt | Gew.-% | 100 | 100 | 100 |

Ausführungsbeispiel anhand des Beispiels 1 der Tabelle 2.

Das pulverförmige niedermolekulare Isocyanat (A1) wird mit dem pulverförmigen Netzmittel (B1) im Gewichtsverhältnis 95 : 5 in einem Pulvermischer vermischt. Die Pulvermischung wird sodann in eine CONDUX-Fliessbettstrahlmühle CGS 50 gegeben, welche mit Druckluft betrieben wird.

Zum Mahlen werden die folgenden Parameter verwendet:

| | |
|---|---|
| Drehzahl des Sichterrades [1/min]: | 3450 |
| Mahlluftdruck (Überdruck) [bar]: | 6 |
| Mahlluftmenge (bezogen auf eine Lufttemperatur von 20 °C) [m³/h]: | 1000 |
| Durchsatz [kg/h]: | 30 |

Für die Beispiele 2 und 3 und die Vergleichsbeispiele 4 und 5 werden die gleichen Mahlparameter verwendet.

**Tabelle 3 gibt die Zusammensetzung der Vergleichsbeispiele wieder.**

| Komponente | Einheit | Vergleichsbeispiele | | | |
|---|---|---|---|---|---|
| | | 4 | 5 | 6 | |
| | - | - | - | als Dispersion Gew.-Teile | als Trockensubstanz Gew.-% |
| niedermolekulares Isocyanat (A1), pulverförmig | Gew.-% | 98 | 82 | - | - |
| Netzmittel (B1), pulverförmig | Gew.-% | 2 | 18 | - | - |
| niedermolekulares Isocyanat (A2), 50 gew.-%ige Dispersion | - | - | - | 133 | 66,5 |
| Netzmittel (B2), pulverförmig | - | - | - | 3,5 | 3,5 |
| Bindemittel 25 gew.-%ige Lösung | - | - | - | 120 | 30 |
| Wasser | - | - | - | 29,5 | - |
| Feststoffgehalt | Gew.-% | 100 | 100 | 35 | 100 |

Im Vergleichsbeispiel 6 der Tabelle 3 wird zur Herstellung des dispergierbaren Pulvers zuerst eine wässrige Dispersion aus den Edukten erzeugt, welche anschliessend einer Nassmahlung unterzogen und in einer Wirbelschicht-Sprühtrocknung getrocknet wird. Das Vergleichsbeispiel 6 entspricht somit dem Beispiel 1 aus der EP 2 450 389 A1.

**Tabelle 4 zeigt die Ergebnisse der Dispergierversuche.**

| | Beispiel 1 | | Beispiel 2 | | Beispiel 3 | | Vergleichsbeispiel 4 | | Trockensubstanz aus Vergleichsbeispiel 6 | |
|---|---|---|---|---|---|---|---|---|---|---|
| Dispersionsgrad | | | | | | | | | | |
| nach | 96 | | 96 | | 97 | | 20 | | 95 | |
| 1 min | 99 | | 99 | | 99 | | 35 | | 98 | |
| 10 min | | | | | | | | | | |
| Korngröße [µm] | d50 | d95 | d50 | d95 | d50 | d95 | d50 | d95 | d50 | d95 |
| nach 10 min | 1,4 | 3,9 | 1,3 | 4,0 | 1,4 | 4,0 | -* | -* | 1,2 | 4,5 |

| | | | | | | | | | | |
|---|---|---|---|---|---|---|---|---|---|---|
| * nicht bestimmt, da Dispersionsgrad zu tief | | | | | | | | | | |

Die Pulver aus den erfindungsgemäßen Beispielen 1 bis 3 zeigen eine bessere Dispergierbarkeit als die Trockensubstanz aus dem Vergleichsbeispiel 6, welches dem Beispiel 1 aus der EP 2 450 389 A1 entspricht (Tabelle 4). Beim Pulver aus dem Vergleichsbeispiel 4 ist die Dispergierbarkeit zu schlecht für kommerzielle Anwendungen, daher wurde auf die Messung der Korngrösse verzichtet.

Bei der Korngrössenmessung nach der Dispergierung zeigen die Pulver aus den Beispielen 1 bis 3 beim d₉₅-Wert mit 3,9 µm bzw. 4,0 µm deutlich kleinere Werte als die Trockensubstanz aus dem Vergleichsbeispiel 6 mit 4,5 µm.

**Tabelle 5 fasst die Ergebnisse der Haftungstests zusammen.**

| | Einheit | Beispiele | | | Vergleichsbeispiel 5 | Vergleichsbeispiel 6 |
|---|---|---|---|---|---|---|
| | | 1 | 2 | 3 | | |
| Peel-Haftung | N/Inch | 270 | 220 | 180 | 120 | 270 |

Die Haftungswerte der erfindungsgemäßen Pulver aus den Beispielen 1 bis 3 liegen jeweils sehr deutlich über dem Mindestwert der Peel-Haftung von 140 N/Inch. Hingegen liegt die Peel-Haftung des Pulvers aus dem Vergleichsbeispiel 5 deutlich darunter. Mit dem erfindungsgemäßen Pulver aus dem Beispiel 1 ergibt sich die gleiche Peel-Haftung wie mit dem Pulver aus dem Vergleichsbeispiel 6.

## Patentansprüche

1. Pulverförmiger, in Wasser dispergierbarer Haftvermittler für textile Verstärkungseinlagen, enthaltend:
a) 85 bis 97 Gew.-% mindestens eines zumindest teilweise verkappten, niedermolekularen Isocyanats, wobei das mindestens eine niedermolekulare Isocyanat eine Molmasse von weniger oder gleich 500 g/mol aufweist,
b) 15 bis 3 Gew.-% eines Alkylnaphthalinsulfonates als Netzmittel sowie
c) 0 bis 10 Gew.-% Additive, wobei Bindemittel ausgeschlossen sind, mit der Maßgabe, dass die Formulierungsbestandteile a + b + c 100 Gew.-% ergeben.

2. Pulverförmiger Haftvermittler nach Anspruch 1, **dadurch gekennzeichnet, dass** das Pulver einen mittleren Partikeldurchmesser im Bereich von 0,1 µm bis 40 µm, bevorzugt von 0,2 µm bis 20 µm und besonders bevorzugt von 0,3 µm bis 12 µm, mittels Lasermessung nach ISO 13320, aufweist.

3. Pulverförmiger Haftvermittler nach Anspruch 1 oder 2, **dadurch gekennzeichnet, dass** die Korngrößenverteilung (d₅₀, d₉₅) der nach 10 Minuten rühren erhaltenen Dispersion mit deionisiertem Wasser, mittels Lasermessung nach ISO 13320, für d₅₀ maximal 5 µm, bevorzugt für d₅₀ maximal 2 µm, besonders bevorzugt für d₅₀ maximal 1,5 µm und für d₉₅ maximal 10 µm, bevorzugt für d₉₅ maximal 6 µm, besonders bevorzugt für d₉₅ maximal 5 µm beträgt.

4. Pulverförmiger Haftvermittler nach mindestens einem der Ansprüche 1 bis 3, **dadurch gekennzeichnet, dass** der Haftvermittler 90 bis 96 Gew.-%, bevorzugt 93 bis 96 Gew.-% , ganz besonders bevorzugt 94 bis 95,5 Gew.-%, des mindestens teilweise verkappten niedermolekularen Isocyanats und
10 bis 4 Gew.-%, bevorzugt 7 bis 4 Gew.-%, besonders bevorzugt 6 bis 4,5 Gew.-% des Alkylnaphthalinsulfonats als Netzmittel enthält.

5. Pulverförmiger Haftvermittler nach mindestens einem der Ansprüche 1 bis 4, **dadurch gekennzeichnet, dass** das mindestens eine niedermolekulare Isocyanat eine Molmasse im Bereich von 90 bis 400 g/mol, bevorzugt im Bereich von 150 bis 300 g/mol aufweist.

6. Pulverförmiger Haftvermittler nach mindestens einem der Ansprüche 1 bis 5, **dadurch gekennzeichnet, dass** das mindestens eine niedermolekulare Isocyanat ein aromatisches, aliphatisches oder cycloaliphatisches Isocyanat ist, insbesondere ausgewählt aus der Gruppe bestehend aus
4,4'-Diphenylmethandiisocyanat (4,4'-MDI), 2,4'-Diphenylmethandiisocyanat (2,4'-MDI), 3,4'-Diphenylmethandiisocyanat (3,4'-MDI), 2,2'-Diphenylmethandiisocyanat (2,2'-MDI), 2,3'-Diphenylmethandiisocyanat (2,3'-MDI), 2,4-Toluoldiisocyanat, 2,6-Toluoldiisocyanat, 1-Isocyanato-3-Isocyanatomethyl-3,5,5-Trimethylcyclohexan, 1,4-Naphthalindiisocyanat (1,4-NDI), 1,5-Naphthalindiisocyanat (1,5-NDI), Isophorondiisocyanat (IPDI), Hexamethylendiisocyanat (HDI) oder Mischungen hiervon.

7. Pulverförmiger Haftvermittler nach mindestens einem der Ansprüche 1 bis 6, **dadurch gekennzeichnet, dass** das mindestens eine zumindest teilweise verkappte niedermolekulare Isocyanat teilweise oder vollständig blockiert ist, insbesondere mit einem Blockierungsmittel ausgewählt aus der Gruppe bestehend aus Monophenolen, insbesondere Phenol, Resorcin, Kresol, Trimethylphenole oder tert. Butylphenole, Lactamen, insbesondere ε-Caprolactam, δ-Valerolactam oder Laurinlactam, Oximen, insbesondere Methyl-Ethyl-Ketoxim (Butanonoxim), Methyl-Amyl-Ketoxim oder Cyclohexanonoxim, leicht enol-bildende Verbindungen, insbesondere Acetoessigester, Acetylaceton oder Malonsäurederivate, primäre, sekundäre oder tertiäre Alkohole, Glykolether, sekundäre aromatische Amine, Imide, Isocyanate, Merkaptane, Triazole sowie Mischungen hiervon.

8. Pulverförmiger Haftvermittler nach mindestens einem der Ansprüche 1 bis 7, **dadurch gekennzeichnet, dass** es sich bei dem mindestens einen zumindest teilweise verkappten niedermolekularen Isocyanat um ein Uretdion handelt.

9. Pulverförmiger Haftvermittler nach Anspruch 8, **dadurch gekennzeichnet, dass** es sich bei dem mindestens einen zumindest teilweise verkappten niedermolekularen Isocyanat um ein Uretdion des Diphenylmethandiisocyanat (MDI) handelt.

10. Pulverförmiger Haftvermittler nach mindestens einem der Ansprüche 1 bis 9, **dadurch gekennzeichnet, dass** das Alkylnaphthalinsulfonat ein Natriumdiisobutylnaphthalinsulfonat ist.

11. Pulverförmiger Haftvermittler nach mindestens einem der Ansprüche 1 bis 10, **dadurch gekennzeichnet, dass** er ausschließlich aus dem zumindest teilweise verkapptem Isocyanat und dem Alkylnaphthalinsulfonat besteht.

12. Pulverförmiger Haftvermittler nach Anspruch 11, **dadurch gekennzeichnet, dass** er aus 95 Gew.-% des mindestens einen verkappten Isocyanats und 5 Gew.-% des Alkylnaphthalinsulfonat besteht.

13. Pulverförmiger Haftvermittler nach mindestens einem der Ansprüche 1 bis 10, **dadurch gekennzeichnet, dass** er 0,1 bis 10 Gew.-% Additive enthält, die ausgewählt sind aus Katalysatoren, Entschäumern, Farbstoffen und/oder Füllstoffen sowie Mischungen hiervon.

14. Verfahren zur Herstellung eines pulverförmigen, in Wasser dispergierbaren Haftvermittlers für textile Verstärkungseinlagen nach mindestens einem der Ansprüche 1 bis 13, **dadurch gekennzeichnet, dass** 85 bis 97 Gew.-% des zumindest teilweise verkappten niedermolekularen Isocyanats, wobei das mindestens eine niedermolekulare Isocyanat eine Molmasse von weniger oder gleich 500 g/mol aufweist, mit 15 bis 3 Gew.-% des Alkylnaphthalinsulfonats als Netzmittel und gegebenenfalls unter Hinzufügung von pulverförmigen Additiven, einer Trockenmahlung unterzogen wird, mit der Maßgabe, die Trockenmahlung so durchgeführt wird, dass die Korngrößenverteilung (d₅₀ und d₉₅), der nach 10 Minuten rühren erhaltenen Dispersion in deionisiertem Wasser mittels Lasermessung nach ISO 13320 für den d₅₀-Wert maximal 5 µm und für den d₉₅-Wert maximal 10 µm beträgt.

15. Verfahren nach Anspruch 14, **dadurch gekennzeichnet, dass** die Trockenmahlung soweit geführt wird, dass der d₅₀-Wert maximal 5 µm, bevorzugt maximal 2 µm, besonders bevorzugt maximal 1,5 µm und der d₉₅-Wert maximal 10 µm, bevorzugt maximal 6 µm und besonders bevorzugt maximal 5 µm beträgt.

16. Verfahren nach Anspruch 14 oder 15, **dadurch gekennzeichnet, dass** die Trockenmahlung mit einer Strahlmühle durchgeführt wird.

17. Verwendung des Haftvermittlers nach mindesten einem der Ansprüche 1 bis 12, für die Behandlung von Verstärkungseinlagen zur Herstellung von verstärkten Gummiprodukten.

## Claims

1. Pulverulent adhesive for textile reinforcing plies which is dispersible in water, comprising:
a) 85 to 97% by weight of at least one at least partially capped, low-molecular isocyanate, whereby the at least one low-molecular isocyanate has a molar mass of less than or equal to 500 g/mol,
b) 15 to 3% by weight of an alkyl naphthalene sulphonate as wetting agent, and also
c) 0 to 10% by weight of additives, binders being excluded, with the proviso that the formulation components a + b + c produce 100% by weight.

2. Pulverulent adhesive according to claim 1, **characterised in that** the powder has an average particle diameter in the range of 0.1 µm to 40 µm, preferably of 0.2 µm to 20 µm and particularly preferred of 0.3 µm to 12 µm determined by means of laser measurement according to ISO 13320.

3. Pulverulent adhesive according to claim 1 or 2, **characterised in that** the particle size distribution (d₅₀, d₉₅) of the dispersion obtained after 10 minutes stirring with de-ionised water, by means of laser measurement according to ISO 13320 is, for dso, at most 5 µm, for d₅₀, preferably at most 2 µm, for dso, particularly preferred at most 1.5 µm and, for d₉₅, at most 10 µm, for d₉₅, preferably at most 6 µm, for d₉₅, particularly preferred at most 5 µm.

4. Pulverulent adhesive according to at least one of the claims 1 to 3, **characterised in that** the adhesive comprises 90 to 96% by weight, preferably 93 to 96% by weight, very particularly preferred 94 to 95.5% by weight, of the at least partially capped, low-molecular isocyanate and
10 to 4% by weight, preferably 7 to 4% by weight, particularly preferred 6 to 4.5% by weight, of the alkyl naphthalene sulphonate as wetting agent.

5. Pulverulent adhesive according to at least one of the claims 1 to 4, **characterised in that** the at least one low-molecular isocyanate has a molar mass range of 90 to 400 g/mol, preferred in the range of 150 to 300 g/mol.

6. Pulverulent adhesive according to at least one of the claims 1 to 5, **characterised in that** the at least one low-molecular isocyanate is an aromatic, aliphatic or cycloaliphatic isocyanate, in particular selected from the group consisting of
4,4'-diphenylmethane diisocyanate (4,4'-MDI), 2,4'-diphenylmethane diisocyanate (2,4'-MDI), 3,4'-diphenylmethane diisocyanate (3,4'-MDI), 2,2'-diphenylmethane diisocyanate (2,2'-MDI), 2,3'-diphenylmethane diisocyanate (2,3'-MDI), 2,4-toluene diisocyanate, 2,6-toluene diisocyanate, 1-isocyanato-3-isocyanatomethyl-3,5,5-trimethylcyclohexane, 1,4-naphthalene diisocyanate (1,4-NDI), 1,5-naphthalene diisocyanate (1,5-NDI), isophorone diisocyanate (IPDI), hexamethylene diisocyanate (HDI) or mixtures hereof.

7. Pulverulent adhesive according to at least one of the claims 1 to 6, **characterised in that** the at least one at least partially capped, low-molecular isocyanate is partially or completely blocked, in particular with a blocking agent selected from the group consisting of monophenols, in particular phenol, resorcinol, cresol, trimethylphenols or tert. butylphenols, lactams, in particular ε-caprolactam, δ-valerolactam or laurinlactam, oximes, in particular methyl ethyl ketoxime (butanone oxime), methyl amyl ketoxime or cyclohexanone oxime, readily enol-forming compounds, in particular acetoacetic acid ester, acetylacetone or malonic acid derivatives, primary, secondary or tertiary alcohols, glycol ether, secondary aromatic amines, imides, isocyanates, mercaptans, triazoles and also mixtures hereof.

8. Pulverulent adhesive according to at least one of the claims 1 to 7, **characterised in that** the at least one at least partially capped, low-molecular isocyanate concerns a uretdione.

9. Pulverulent adhesive according to claim 8, **characterised in that** the at least one at least partially capped, low-molecular isocyanate concerns a uretdione of diphenylmethane diisocyanate (MDI).

10. Pulverulent adhesive according to at least one of the claims 1 to 9, **characterised in that** the alkyl naphthalene sulphonate is a sodium diisobutyl naphthalene sulphonate.

11. Pulverulent adhesive according to at least one of the claims 1 to 10, **characterised in that** it consists exclusively of the at least partially capped isocyanate and the alkyl naphthalene sulphonate.

12. Pulverulent adhesive according to claim 11, **characterised in that** it consists of 95% by weight of the at least one capped isocyanate and 5% by weight of the alkyl naphthalene sulphonate.

13. Pulverulent adhesive according to at least one of the claims 1 to 10, **characterised in that** it comprises 0.1% to 10% by weight of additives which are selected from catalysts, defoamers, colourants and/or fillers, and also mixtures hereof.

14. Method for the production of a pulverulent adhesive for textile reinforcing plies which is dispersible in water according to at least one of the claims 1 to 13, **characterised in that** 85 to 97% by weight of the at least partially capped, low-molecular isocyanate, whereby the at least one low-molecular isocyanate has a molar mass of less than or equal to 500 g/mol, with 15 to 3% by weight of the alkyl naphthalene sulphonate as wetting agent and possibly with the addition of pulverulent additives, is subjected to dry-grinding, with the proviso that the dry-grinding is implemented such that the particle size distribution (dso and d₉₅) of the dispersion obtained after 10 minutes stirring in deionised water by means of a laser measurement according to ISO 13320 is, for the dso value, at most 5 µm and, for the d₉₅ value, at most 10 µm.

15. Method according to claim 14, **characterised in that** the dry-grinding is implemented until the dso value is at most 5 µm, preferably at most 2 µm and very particularly preferred at most 1.5 µm and the d₉₅ value is at most 10 µm, preferably at most 6 µm and particularly preferred at most 5 µm.

16. Method according to claim 14 or 15, **characterised in that** the dry-grinding is implemented with a jet mill.

17. Use of the adhesive according to at least one of the claims 1 to 12, for the treatment of reinforcing plies for the production of reinforced rubber products.

## Revendications

1. Promoteur d'adhérence en poudre, dispersible dans l'eau, pour triplures de renforcement textiles, contenant :
a) 85 à 97 % en poids d'au moins un isocyanate à faible masse moléculaire, au moins partiellement coiffé, le ou les isocyanates à faible masse moléculaire présentant une masse moléculaire inférieure ou égale à 500 g/mol,
b) 15 à 3 % en poids d'un alkylnaphtalènesulfonate, en tant que mouillant, ainsi que
c) 0 à 10 % en poids d'additifs, à l'exclusion de liants, à la condition que la somme des constituants de la formulation a + b + c fasse 100 % en poids.

2. Promoteur d'adhérence en poudre selon la revendication 1, **caractérisé en ce que** la poudre présente une granulométrie moyenne comprise dans la plage de 0,1 µm à 40 µm, de préférence de 0,2 µm à 20 µm et d'une manière particulièrement préférée de 0,3 µm à 12 µm, mesurée par diffraction laser selon ISO 13320.

3. Promoteur d'adhérence en poudre selon la revendication 1 ou 2, **caractérisé en ce que** la distribution granulométrique (d₅₀, d₉₅) de la dispersion obtenue après 10 minutes d'agitation avec de l'eau désionisée, par une mesure par diffraction laser selon ISO 13320, est pour d₅₀ au maximum de 5 µm, de préférence pour d₅₀ au maximum de 2 µm, d'une manière particulièrement préférée pour d₅₀ au maximum de 1,5 µm, et pour d₉₅ au maximum de 10 µm, de préférence pour d₉₅ au maximum de 6 µm, d'une manière particulièrement préférée pour d₉₅ au maximum de 5 µm.

4. Promoteur d'adhérence en poudre selon au moins l'une des revendications 1 à 3, **caractérisé en ce que** le promoteur d'adhérence contient 90 à 96 % en poids, de préférence de 93 à 96 % en poids, d'une manière tout particulièrement préférée de 94 à 95,5 % en poids, de l'isocyanate à faible masse moléculaire au moins partiellement coiffé, et
10 à 4 % en poids, de préférence 7 à 4 % en poids, d'une manière particulièrement préférée de 6 à 4,5 % en poids de l'alkylnaphtalènesulfonate en tant que mouillant.

5. Promoteur d'adhérence en poudre selon au moins l'une des revendications 1 à 4, **caractérisé en ce que** le ou les isocyanates à faible masse moléculaire présentent une masse moléculaire comprise dans la plage de 90 à 400 g/mol, de préférence dans la plage de 150 à 300 g/mol.

6. Promoteur d'adhérence en poudre selon au moins l'une des revendications 1 à 5, **caractérisé en ce que** le ou les isocyanates à faible masse moléculaire sont des isocyanates aromatiques, aliphatiques ou cycloaliphatiques, en particulier choisis dans le groupe consistant en
le diisocyanate de 4,4'-diphénylméthane (4,4'-MDI),
le diisocyanate de 2,4'-diphénylméthane (2,4'-MDI),
le diisocyanate de 3,4'-diphénylméthane (3,4'-MDI),
le diisocyanate de 2,2'-diphénylméthane (2,2'-MDI),
le diisocyanate de 2,3'-diphénylméthane (2,3'-MDI),
le diisocyanate de 2,4-toluène, le diisocyanate de 2,6-toluène, le 1-isocyanato-3-isocyanatométhyl-3,5,5-triméthylcyclohexane, le diisocyanate de 1,4-naphtalène (1,4-NDI), le diisocyanate de 1,5-naphtalène (1,5-NDI), le diisocyanate d'isophorone (IPDI), le diisocyanate d'hexaméthylène (HDI) ou les mélanges de ceux-ci.

7. Promoteur d'adhérence en poudre selon au moins l'une des revendications 1 à 6, **caractérisé en ce que** le ou les isocyanates à faible masse moléculaire au moins partiellement coiffés sont bloqués en totalité ou en partie, en particulier avec un agent de blocage choisi dans le groupe consistant en les monophénols, en particulier le phénol, le résorcinol, le crésol, les triméthylphénols ou les tert-butylphénols, les lactames, en particulier l'ε-caprolactame, le δ-valérolactame ou le laurolactame, les oximes, en particulier la méthyl-éthyl-cétoxime (butanonoxime), la méthyl-amyl-cétoxime ou la cyclohexanonoxime, les composés formant facilement un énol, en particulier l'acétoacétate d'éthyle, l'acétylacétone ou les dérivés de l'acide malonique, les alcools primaires, secondaires ou tertiaires, les glycoléthers, les amines aromatiques secondaires, les imides, les isocyanates, les mercaptans, les triazoles, ainsi que les mélanges de ceux-ci.

8. Promoteur d'adhérence en poudre selon au moins l'une des revendications 1 à 7, **caractérisé en ce que**, pour ce qui concerne le ou les isocyanates à faible masse moléculaire au moins partiellement coiffés, il s'agit d'une uretdione.

9. Promoteur d'adhérence en poudre selon la revendication 8, **caractérisé en ce que**, pour ce qui concerne le ou les isocyanates à faible masse moléculaire au moins partiellement coiffés, il s'agit d'une uretdione du diisocyanate de diphénylméthane (MDI).

10. Promoteur d'adhérence en poudre selon au moins l'une des revendications 1 à 9, **caractérisé en ce que** l'alkylnaphtalènesulfonate est un diisobutylnaphtalènesulfonate de sodium.

11. Promoteur d'adhérence en poudre selon au moins l'une des revendications 1 à 10, **caractérisé en ce qu'**il est exclusivement constitué de l'isocyanate au moins partiellement coiffé et de l'alkylnaphtalènesulfonate.

12. Promoteur d'adhérence en poudre selon la revendication 11, **caractérisé en ce qu'**il est constitué de 95 % en poids du ou des isocyanates coiffés et de 5 % en poids de l'alkylnaphtalènesulfonate.

13. Promoteur d'adhérence en poudre selon au moins l'une des revendications 1 à 10, **caractérisé en ce qu'**il contient 0,1 à 10 % d'additifs, qui sont choisis parmi les catalyseurs, les antimoussants, les colorants et/ou les matières de charge, ainsi que les mélanges de ceux-ci.

14. Procédé de fabrication d'un promoteur d'adhérence en poudre dispersible dans l'eau pour triplure de renforcement textiles selon au moins l'une des revendications 1 à 13, **caractérisé en ce qu'**on soumet à un broyage à sec 85 à 97 % en poids de l'isocyanate à faible masse moléculaire au moins partiellement coiffé, le ou les isocyanates à faible masse moléculaire présentant une masse moléculaire inférieure ou égale à 500 g/mol, avec 15 à 3 % en poids de l'alkylnaphtalènesulfonate en tant que mouillant, et éventuellement avec addition d'additifs en poudre, à la condition que le broyage à sec soit mis en oeuvre de telle sorte que la distribution granulométrique (d₅₀ et d₉₅) de la dispersion obtenue après 10 minutes d'agitation, dans de l'eau désionisée, la mesure étant effectuée par diffraction laser selon ISO 13320, soit pour d₅₀ au maximum de 5 µm et pour d₉₅ au maximum de 10 µm.

15. Procédé selon la revendication 14, **caractérisé en ce qu'**on poursuit le broyage à sec jusqu'à ce que la d₅₀ soit au maximum de 5 µm, de préférence au maximum de 2 µm, d'une manière particulièrement préférée au maximum de 1,5 µm, et que la d₉₅ soit au maximum de 10 µm, de préférence au maximum de 6 µm et d'une manière particulièrement préférée au maximum de 5 µm.

16. Procédé selon la revendication 14 ou 15, **caractérisé en ce que** le broyage à sec est réalisé avec un pulvérisateur à jet.

17. Utilisation du promoteur d'adhérence selon au moins l'une des revendications 1 à 12, pour le traitement de triplures de renforcement destinées à la fabrication de produits de caoutchouc renforcés.
